# EUROPEAN PATENT APPLICATION

(11) **EP 4 090 081 A1**
(43) Date of publication of application: **16.11.2022**
(21) Application number: 20918366.4
(22) Date of filing: 17.09.2020
(51) Int. Cl.: H04W 48/08, H04W 48/16

(54) **METHOD AND APPARATUS FOR AUTOMATIC ACCESS OF INTERNET OF THINGS DEVICE TO WIRELESS LOCAL AREA NETWORK**

(30) Priority: 10.02.2020 CN 202010085339; 28.04.2020 CN 202010352236
(71) Applicant: Huawei Technologies Co., Ltd., Shenzhen, Guangdong 518129, (CN)
(72) Inventor: ZHANG, Yinxi, Shenzhen, Guangdong 518129 (CN); LI, Youtao, Shenzhen, Guangdong 518129 (CN); HUANG, Zhongjin, Shenzhen, Guangdong 518129 (CN); LIU, Wei, Shenzhen, Guangdong 518129 (CN); BAO, Xiaosheng, Shenzhen, Guangdong 518129 (CN)
(74) Representative: Isarpatent
(86) International application number: PCT/CN2020/115822
(87) International publication number: WO 2021/159708

(57) **Abstract**

This application discloses a method for automatically accessing a wireless local area network (WLAN) by an Internet of Things (IoT) device, and an apparatus, so that the IoT device can automatically access the WLAN. This reduces operation workload of network operation personnel, and reduces enterprise costs. The method in embodiments of this application includes: sending, by a network device to the IoT device, a first packet carrying a first SSID and first indication information that indicates the IoT device to access a first WLAN identified by the first SSID; parsing, by the IoT device, the first packet to obtain the first indication information; and sending, based on the first indication information, a first access request to request to access the first WLAN identified by the first SSID.

## Description

This application claims priority to Chinese Patent Application No. 202010085339.1, filed on February 10, 2020, and entitled "METHOD FOR AUTOMATICALLY ACCESSING WLAN BY IOT TERMINAL", and to Chinese Patent Application No. 202010352236.7, filed on April 28, 2020, and entitled "METHOD FOR AUTOMATICALLY ACCESSING WIRELESS LOCAL AREA NETWORK BY INTERNET OF THINGS DEVICE, AND APPARATUS", which are incorporated herein by reference in their entireties.

### TECHNICAL FIELD

This application relates to the communications field, and in particular, to a method for automatically accessing a wireless local area network WLAN by an Internet of Things (Internet of things, IOT) device, and an apparatus.

### BACKGROUND

With digital and intelligent transformation of modern enterprises, more Internet of Things terminals appear in campuses of enterprises, for example, early printers and cameras, and latest intelligent light emitting diode (light emitting diode, LED) lights, conference room projection, and conference terminals. A requirement of an enterprise on a campus network changes from access of only office systems (such as laptops and desktops) to unified access of the office systems and various IoT terminals.

With development of wireless technologies, more and more Internet of Things terminals choose convenient wireless technologies for digital and intelligent transformation. The wireless technology simplifies cabling and is especially suitable for a scenario in which a legacy terminal is reconstructed. A wireless internet access (for example, WIFI) technology is a common choice, especially in scenarios with a large amount of interaction data, such as cameras and facial recognition access control.

When the Wi-Fi technology is used to access a wireless network, in a connection phase, a to-be-accessed service set identifier (service set identifier, SSID) needs to be specified on a terminal side. For example, when a mobile phone is connected to a home wireless router, an SSID that is preset on the router needs to be selected in a Wi-Fi connection interface. In the campuses of the enterprises, there may be a large quantity of Wi-Fi-based Internet of Things terminals. If we need to set an SSID for the IoT terminals one by one, operation workload of network operation personnel is relatively heavy, and enterprise costs are increased.

### SUMMARY

This application provides a method for automatically accessing a wireless local area network WLAN by an IoT device, and an apparatus, so that the IoT device can automatically access the WLAN. This reduces operation workload of network operation personnel, and reduces enterprise costs.

According to a first aspect, this application provides a method for automatically accessing a WLAN by an IoT device. The method specifically includes: sending, by a first network device to the IoT device, a first packet carrying a first SSID and first indication information that indicates the IoT device to access a first WLAN identified by the first SSID; parsing, by the IoT device, the first packet to obtain the first indication information; and sending, based on the first indication information, a first access request to request to access the first WLAN identified by the first SSID.

The packet sent by the network device directly carries the indication information for triggering the IoT device to access the WLAN identified by the SSID. Therefore, a process in which a corresponding SSID is manually configured from a plurality of SSIDs on the IoT device is omitted, and a function of automatically accessing the WLAN is implemented. Further, operation workload of network operation personnel is reduced, and enterprise costs are reduced.

Optionally, the first access request may be an initial access request that the IoT device requests to access the first WLAN. Alternatively, the first access request is a secondary access request that the IoT device requests to access the first WLAN.

Based on the foregoing solution, when the first access request is the initial access request, the first packet may carry the first indication information in the following several possible implementations.

In a possible implementation, the first packet carries the first indication information by using an extended field. Specifically, the extended field may be an extended element (element) field or an extended feature (feature) field.

In another possible implementation, the first indication information is carried by extending a reserved field of the first packet.

In another possible implementation, the first indication information is carried by extending an extension (extention) field that is of the first packet and that carries an element field of the first SSID.

Optionally, the first indication information includes a network descriptor (Network Description, ND) or an access information descriptor.

Optionally, the ND is used to indicate that the first SSID is an IoT SSID. That is, the ND indicates that the SSID is an SSID that can be automatically accessed by the IoT device. In this way, the IoT device may be triggered to automatically access the WLAN identified by the SSID.

Optionally, the first indication information is used to indicate an access parameter required by the IoT device to access the first WLAN. The access parameter includes but is not limited to at least one of authentication information and encryption information.

Optionally, in this scenario, the first packet may be a beacon frame or a probe response frame. The first network device is a first wireless access point (AP).

Based on the foregoing solution, when the first access request is the secondary access request, the first packet may carry the first indication information in the following several possible implementations. In a possible implementation, the first packet carries the first indication information by using an extended field. Specifically, the extended field may be an extended element field or an extended feature feature field.

Optionally, the first indication information includes a network descriptor (Network Description, ND) or an access information descriptor.

Optionally, the first indication information is used to indicate an access parameter required by the IoT device to access the first WLAN. The access parameter includes but is not limited to at least one of authentication information and encryption information.

Optionally, the access information descriptor is used to indicate that the first SSID is an SSID for secondary access. Optionally, before the IoT device receives the first packet, that is, before the IoT device performs secondary access, the IoT device receives a second packet. The second packet carries a second SSID and second indication information. The second indication information is used to indicate the IoT device to access a second WLAN identified by the second SSID. Then, the IoT device sends a second access request based on the second indication information, to request to access the second WLAN.

In this solution, the first packet is a wireless network disassociation frame or an http restful interface packet. The second packet is a beacon frame or a probe response frame.

Optionally, in this scenario, the first network device is a wireless access point AP or a control management device. Optionally, the first packet may further carry third indication information, and the third indication information is used to indicate an access procedure in which the IoT device accesses a WLAN. The second packet may further carry fourth indication information, and the fourth indication information is used to indicate an access procedure in which the IoT device accesses a WLAN. In this way, the IoT device can be notified in real time to change the access procedure, thereby ensuring access correctness.

According to a second aspect, this application provides a method for automatically accessing a WLAN by an IoT device. The method specifically includes: sending, by a first network device to the IoT device, a first packet carrying a first SSID and first indication information that indicates the IoT device to access a first WLAN identified by the first SSID; parsing, by the IoT device, the first packet to obtain the first indication information; sending, based on the first indication information, a first access request to the first network device; and receiving, by the first network device, the first access request that is sent by the IoT device for requesting to access the first WLAN.

The packet sent by the network device directly carries the indication information for triggering the IoT device to access the WLAN identified by the SSID. Therefore, a process in which the IoT device manually configures a corresponding SSID from a plurality of SSIDs is omitted, and a function of automatically accessing the WLAN is implemented. Further, operation workload of network operation personnel is reduced, and enterprise costs are reduced.

Optionally, the first access request may be an initial access request that the IoT device requests to access the first WLAN. Alternatively, the first access request is a secondary access request that the IoT device requests to access the first WLAN.

Based on the foregoing solution, when the first access request is the initial access request, the first packet may carry the first indication information in the following several possible implementations.

In a possible implementation, the first packet carries the first indication information by using an extended field. Specifically, the extended field may be an extended element field or an extended feature feature field.

In another possible implementation, the first indication information is carried by extending a reserved field of the first packet.

In another possible implementation, the first indication information is carried by extending an extension extention field that is of the first packet and that carries an element field of the first SSID.

Optionally, the first indication information includes a network descriptor (Network Description, ND) or an access information descriptor.

Optionally, the ND is used to indicate that the first SSID is an IoT SSID. That is, the ND indicates that the SSID is an SSID that can be automatically accessed by the IoT device. In this way, the IoT device may be triggered to automatically access the WLAN identified by the SSID.

Optionally, the first indication information is used to indicate an access parameter required by the IoT device to access the first WLAN. The access parameter includes but is not limited to at least one of authentication information and encryption information.

Optionally, in this scenario, the first packet may be a beacon frame or a probe response frame. The first network device is a first wireless access point AP.

Based on the foregoing solution, when the first access request is the secondary access request, the first packet may carry the first indication information in the following several possible implementations. In a possible implementation, the first packet carries the first indication information by using an extended field. Specifically, the extended field may be an extended element field or an extended feature feature field.

Optionally, the first indication information includes a network descriptor (Network Description, ND) or an access information descriptor.

Optionally, the first indication information is used to indicate an access parameter required by the IoT device to access the first WLAN. The access parameter includes but is not limited to at least one of authentication information and encryption information.

Optionally, the access information descriptor is used to indicate that the first SSID is an SSID for secondary access. Optionally, before the IoT device receives the first packet, that is, before the IoT device performs secondary access, the first network device sends a second packet to the IoT device. The second packet carries a second SSID and second indication information. The second indication information is used to indicate the IoT device to access a second WLAN identified by the second SSID. The first network device receives a second access request that is sent by the IoT device for requesting to access the second WLAN.

In this solution, the first packet is a wireless network disassociation frame or an http restful interface packet. The second packet is a beacon frame or a probe response frame.

Optionally, in this scenario, the first network device is a wireless access point AP or a control management device. Optionally, the first packet may further carry third indication information, and the third indication information is used to indicate an access procedure in which the IoT device accesses a WLAN. The second packet may further carry fourth indication information, and the fourth indication information is used to indicate an access procedure in which the IoT device accesses a WLAN. In this way, the IoT device can be notified in real time to change the access procedure, thereby ensuring access correctness.

According to a third aspect, this application provides an IoT device. The IoT device has a function of implementing the IoT device in the first aspect or the second aspect. The function may be implemented by hardware, or may be implemented by hardware executing corresponding software. The hardware or software includes one or more modules corresponding to the function.

In a possible implementation, the IoT device includes units or modules configured to perform the steps in the first aspect or the second aspect. For example, the IoT device includes: a receiving module, configured to obtain a first packet sent by a first network device, where the first packet carries at least one first service set identifier SSID and first indication information, and the first indication information is used to indicate the IoT device to access a first wireless local area network WLAN identified by the first SSID; and
a sending module, configured to send a first access request based on the first indication information, to request to access the first WLAN.

Optionally, the IoT device further includes a storage module, configured to store a program instruction and data that are necessary for the IoT device.

In a possible implementation, the IoT device includes a processor and a transceiver. The processor is configured to support the IoT device in performing a corresponding function in the method provided in the first aspect or the second aspect. The transceiver is configured to: indicate communication between the IoT device and the network device, and send, to the network device, information or an instruction related in the foregoing method. Optionally, the IoT device may further include a memory. The memory is configured to be coupled to the processor, and stores a program instruction and data that are necessary for the IoT device.

In a possible implementation, when the IoT device is configured as a chip, the chip includes a processing module and a transceiver module. The processing module may be a processor, and the processor is configured to generate an access request. The transceiver module may be an input/output interface, a pin, a circuit, or the like on the chip. The transceiver module transmits the access request generated by the processor to another chip or module coupled to the chip. The processing module may execute a computer-executable instruction stored in a storage unit, to support the IoT device in performing the method provided in the first aspect or the second aspect. Optionally, the storage unit may be a storage unit in the chip, for example, a register, a buffer, or the like. The storage unit may alternatively be a storage unit outside the chip, for example, a read-only memory (read-only memory, ROM) or another type of static storage device that can store static information and an instruction, a random access memory (random access memory, RAM), or the like.

In a possible implementation, the IoT device includes a processor, a baseband circuit, a radio frequency circuit, and an antenna. The processor is configured to control some functions of circuits. The baseband circuit is configured to generate an access request that includes signaling information. After the radio frequency circuit performs, on the access request, processing such as analog conversion, filtering, amplification, and up-conversion, the access request is sent to the network device by using the antenna. Optionally, the IoT device further includes a memory, and the memory stores a program instruction and data that are necessary for the IoT device.

Any processor mentioned above may be a general-purpose central processing unit (CPU), a microprocessor, an application-specific integrated circuit (application-specific integrated circuit, ASIC), or one or more integrated circuits configured to control program execution of the method for automatically accessing a WLAN by an IoT device in the foregoing aspects.

According to a fourth aspect, this application provides a network device. The network device has a function of implementing the network device in the first aspect or the second aspect. The function may be implemented by hardware, or may be implemented by hardware executing corresponding software. The hardware or software includes one or more modules corresponding to the function.

In a possible implementation, the network device includes units or modules configured to perform the steps in the first aspect or the second aspect. For example, the network device includes: a sending module, configured to send a first packet to an IoT device, where the first packet carries at least one first service set identifier SSID and first indication information, and the first indication information is used to indicate the IoT device to access a first wireless local area network WLAN identified by the first SSID; and
a receiving module, configured to receive a first access request that is sent by the IoT device for requesting to access the first WLAN.

Optionally, the network device further includes a storage module, configured to store a program instruction and data that are necessary for the network device.

In a possible implementation, the network device includes a processor and a transceiver. The processor is configured to support the network device in performing a corresponding function in the method provided in the first aspect or the second aspect. The transceiver is configured to: indicate communication between the network device and the IoT device, and send, to the IoT device, information or an instruction related in the foregoing method. Optionally, the network device may further include a memory. The memory is configured to couple to the processor, and stores a program instruction and data that are necessary for the network device.

In a possible implementation, when the network device is configured as a chip, the chip includes a processing module and a transceiver module. The processing module may be a processor, and the processor is configured to generate a packet. The transceiver module may be an input/output interface, a pin, a circuit, or the like on the chip. The transceiver module transmits the packet generated by the processor to another chip or module coupled to the chip. The processing module may execute a computer-executable instruction stored in a storage unit, to support the network device in performing the method provided in the first aspect or the second aspect. Optionally, the storage unit may be a storage unit in the chip, for example, a register, a buffer, or the like. The storage unit may alternatively be a storage unit outside the chip, for example, a read-only memory (read-only memory, ROM) or another type of static storage device that can store static information and an instruction, a random access memory (random access memory, RAM), or the like.

In a possible implementation, the network device includes a processor, a baseband circuit, a radio frequency circuit, and an antenna. The processor is configured to control some functions of circuits. The baseband circuit is configured to generate a packet that includes signaling information. After the radio frequency circuit performs, on the packet, processing such as analog conversion, filtering, amplification, and up-conversion, the packet is sent to the IoT device by using the antenna. Optionally, the network device further includes a memory, and the memory stores a program instruction and data that are necessary for the network device.

Any processor mentioned above may be a general-purpose CPU, a microprocessor, an ASIC, or one or more integrated circuits configured to control program execution of the method for automatically accessing a WLAN by a network device in the foregoing aspects.

According to a fifth aspect, this application provides a chip system. The chip system includes a processor, configured to support a network device or an IoT device in implementing functions related in the foregoing aspects, for example, generating or processing data and/or information related in the foregoing aspects. In a possible design, the chip system further includes a memory. The memory is configured to store a program instruction and data that are necessary for the network device or the IoT device, to implement a function in any one of the foregoing aspects. The chip system may include a chip, or may include a chip and another discrete component.

According to a sixth aspect, this application provides a communications system. The system includes the IoT device and the network device in the foregoing aspects.

According to a seventh aspect, this application provides a computer-readable storage medium. The computer-readable storage medium stores computer instructions. When the computer instructions are run on a computer, the computer is enabled to perform the method according to the first aspect or the second aspect.

According to an eighth aspect, this application provides a computer program product, including a program. When the program is run on a computer, the computer is enabled to perform the method according to the first aspect or the second aspect.

### BRIEF DESCRIPTION OF DRAWINGS

FIG. 1 is an example diagram of a system architecture of an Internet of Things system;
FIG. 2 is an example architectural diagram of an Internet of Things application scenario according to an embodiment of this application;
FIG. 3 is an example diagram of a hardware architecture of an IoT device or a network device according to an embodiment of this application;
FIG. 4 is an example schematic structural diagram of software composition of a network device according to an embodiment of this application;
FIG. 5 is an example schematic structural diagram of software composition of a control management device according to an embodiment of this application;
FIG. 6 is an example schematic structural diagram of software composition of an IoT device according to an embodiment of this application;
FIG. 7 is a schematic diagram of an embodiment of a method for automatically accessing a WLAN by an IoT device according to an embodiment of this application;
FIG. 8 is a schematic diagram of another embodiment of a method for automatically accessing a WLAN by an IoT device according to an embodiment of this application;
FIG. 9 is a schematic diagram of another embodiment of a method for automatically accessing a WLAN by an IoT device according to an embodiment of this application;
FIG. 10 is a schematic diagram of another embodiment of a method for automatically accessing a WLAN by an IoT device according to an embodiment of this application;
FIG. 11 is a schematic diagram of another embodiment of a method for automatically accessing a WLAN by an IoT device according to an embodiment of this application;
FIG. 12 is a schematic diagram of another embodiment of a method for automatically accessing a WLAN by an IoT device according to an embodiment of this application;
FIG. 13 is a schematic diagram of an embodiment of an IoT device according to an embodiment of this application;
FIG. 14 is a schematic diagram of another embodiment of an IoT device according to an embodiment of this application;
FIG. 15 is a schematic diagram of an embodiment of a network device according to an embodiment of this application;
FIG. 16 is a schematic diagram of another embodiment of a network device according to an embodiment of this application; and
FIG. 17 is a schematic diagram of an embodiment of a communications system according to an embodiment of this application.

### DESCRIPTION OF EMBODIMENTS

To make the objectives, technical solutions, and advantages of this application clearer and more comprehensible, the following describes embodiments of this application with reference to the accompanying drawings. A person of ordinary skill in the art may learn that as a new application scenario emerges, the technical solutions provided in the embodiments of this application are also applicable to a similar technical problem.

In the specification, claims, and the accompanying drawings of this application, the terms "first", "second", and the like are intended to distinguish similar objects but do not necessarily indicate a specific order or sequence. It should be understood that the data termed in such a way is interchangeable in a proper circumstance, so that the embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved. Division into units in this application is logical division and may be another division in an actual implementation. For example, a plurality of units may be combined or integrated into another system, or some features may be ignored or not performed. In addition, the displayed or discussed mutual couplings or direct couplings or communications connections may be implemented through some interfaces. The indirect couplings or communications connections between the units may be implemented in electronic or other similar forms. This is not limited in this application. In addition, units or subunits described as separate components may be or may not be physically separated, may be or may not be physical units, or may be distributed into a plurality of circuit units. Objectives of the solutions of this application may be achieved by selecting some or all of the units based on an actual requirement.

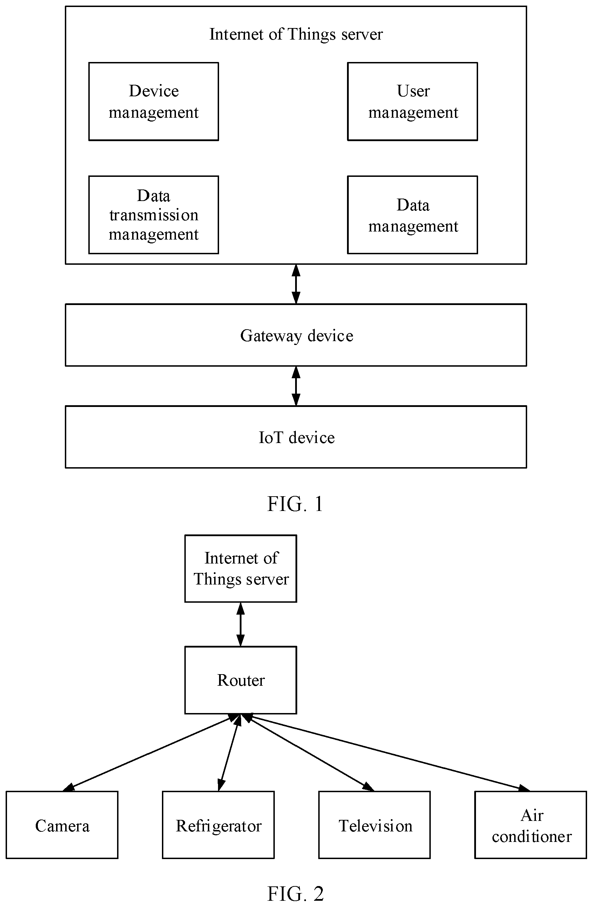

Internet of Things (IoT) is a network that enables, based on information carriers such as internet and a conventional telecommunications network, all common physical objects that can be independently addressed to implement interconnection and interworking. The Internet of Things is different from an internet that we are familiar with: The Internet connects people to people, people to things, and people to information, while the Internet of Things connects things to things. The Internet of Things is constructed based on the current internet and communication technologies, and does not depend on specific hardware modules. Users can easily access the Internet of Things based on their own device technical architectures. An architecture of the Internet of Things may be shown in FIG. 1, including an Internet of Things server, a gateway device, and an IoT device. The Internet of Things server includes four modules: device management, user management, data transmission management, and data management.

Certainly, the Internet of Things server may also include another function module extended based on the foregoing module. In the foregoing structure, communication between the Internet of Things server and a device is essentially constructed based on a communications protocol. In this way, the Internet of Things may use a Wi-Fi, 4G, or 5G communications technology, or even a communications technology that may be implemented in the future, to implement the communication between the device and the Internet of Things server. Communication between devices may be implemented by using communications technologies such as Wi-Fi and Bluetooth (Bluetooth). Therefore, in the architecture of the Internet of Things, the gateway device may be a router, a Bluetooth device, a base station, or the like. As shown in FIG. 2, the technical solution provided in the embodiments of this application may be applied to an Internet of Things application scenario shown in FIG. 2. The application scenario is applicable to a local environment in which all IoT devices run. The devices are connected to the router through Wi-Fi or a wired connection, and then the Internet of things server is connected to the router. For example, if we have an architecture of accessing the internet through a Wi-Fi router, a refrigerator, a television, a mobile phone, and an air conditioner at home can all access a WLAN through the router. Currently, when the Wi-Fi technology is used to access a wireless network, in a connection phase, a to-be-accessed SSID needs to be specified on a terminal side. For example, when a mobile phone is connected to a home wireless router, an SSID that is preset on the router needs to be selected in a Wi-Fi connection interface. In campuses of enterprises, there may be a large quantity of Wi-Fi-based Internet of Things terminals. If we need to set SSIDs one by one to which IoT terminals need to connect, operation workload of network operation personnel is relatively heavy, and enterprise costs are increased.

To resolve this problem, an embodiment of this application provides a method for automatically accessing a WLAN by an IoT terminal. A network device sends, to the IoT device, a packet carrying an SSID and indication information that indicates the IoT device to access a WLAN identified by the SSID. Then, the IoT device parses the packet to obtain the indication information, and sends, based on the indication information, an access request to request to access the WLAN identified by the SSID.

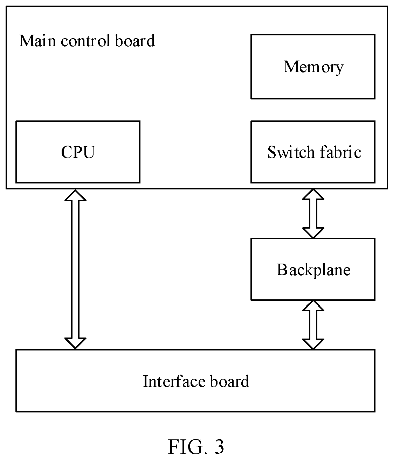

Hardware structures of network devices (a wireless access point, an access controller, and a switch) and a control management device in this embodiment of this application are the same as hardware structures of existing network devices. In a specific implementation, as shown in FIG. 3, the network device mainly includes several parts such as a main control board, a backplane, and an interface board. A CPU on the main control board mainly completes task scheduling and data forwarding control, including control plane communication and forwarding plane communication in a network, such as data encapsulation, data decapsulation, and querying of traffic forwarding information. A switch fabric on the main control board works with the interface board to complete forwarding of network data. A memory on the main control board is configured to store and exchange various types of data or software, including user access information during network communication and information about a forwarding device.

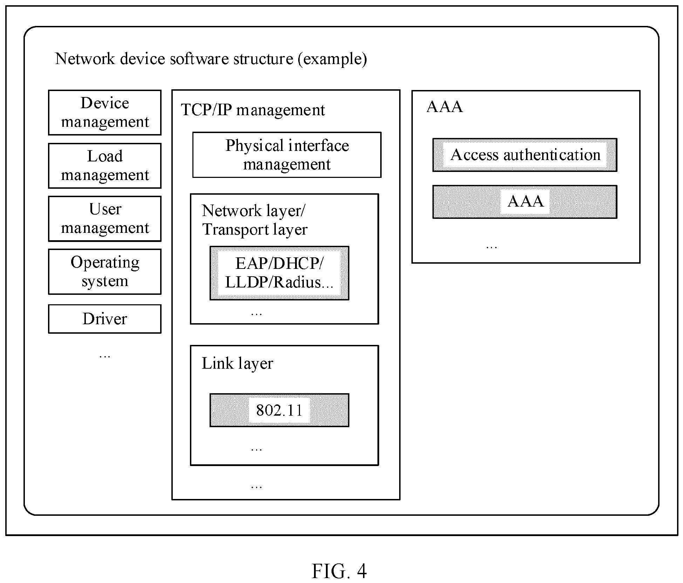

However, an example solution of the network device in this embodiment of this application in terms of a software structure and a feature is shown in FIG. 4. Information such as an extensible authentication protocol (Extensible Authentication Protocol, EAP), a dynamic host configuration protocol (Dynamic Host Configuration Protocol, DHCP), a link layer discovery protocol (Link Layer Discovery Protocol, LLDP), and a Remote Authentication Dial-In User Service (Remote Authentication Dial In User Service, Radius) is added to a network layer or a transport layer. The 802.11 protocol is added to a link layer. In addition, access authentication and AAA are added to authentication, authorization, and accounting (Authentication, Authorization, Accounting, AAA).

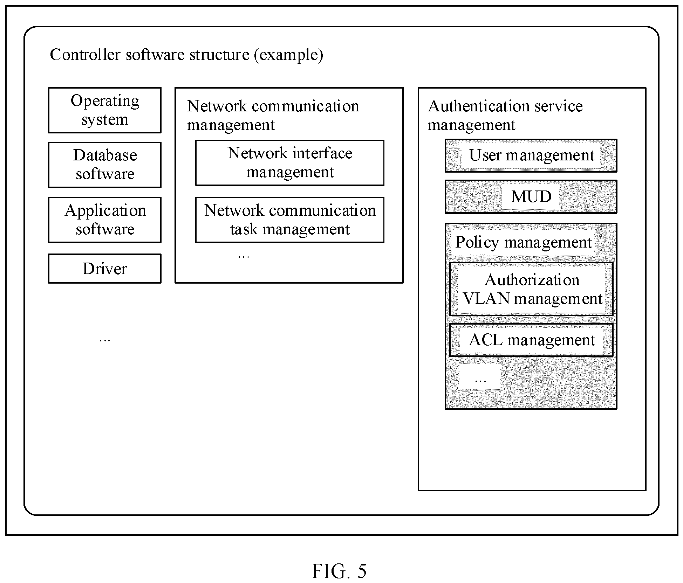

An example solution of the control management device (namely, a controller shown in FIG. 5) in terms of a software structure and a feature is shown in FIG. 5. Functions such as user management, a Manufacturer Usage Description (Manufacturer Usage Descriptions, MUD), and policy management are added to authentication service management. The policy management includes authorized virtual local area network (VLAN) management and access control list (ACL) management.

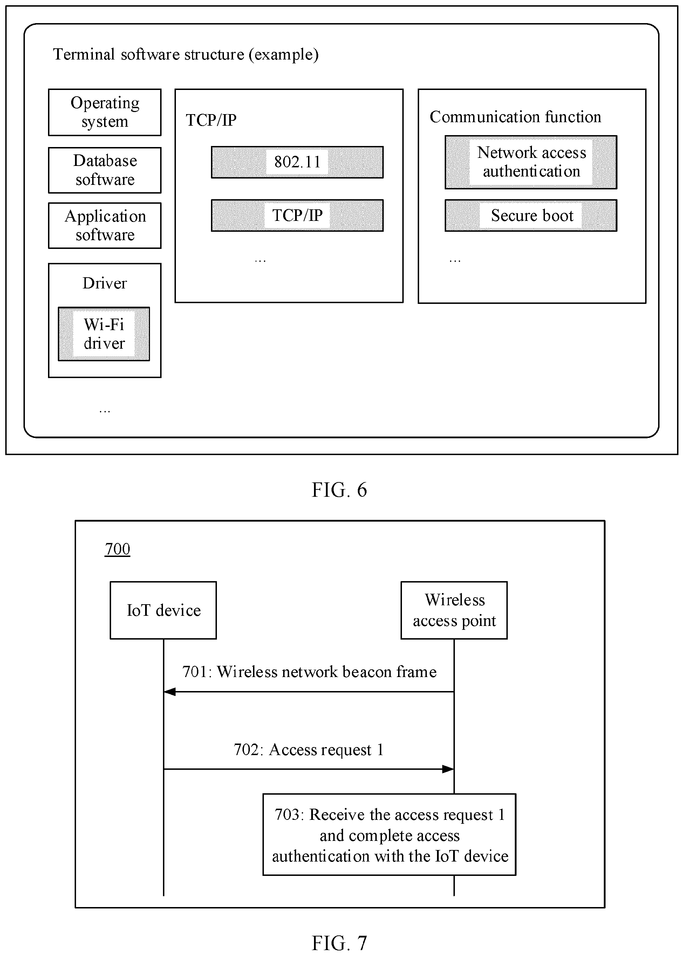

However, a hardware structure and a software structure of the IoT device (namely, a terminal shown in FIG. 6) are completely the same as a hardware structure and a software structure of general software, and only functions related to the authentication service management and the like of the present invention are added based on functions of the general software. An example solution of the IoT device in terms of a software structure and a feature is shown in FIG. 6. A Wi-Fi driver needs to be modified to be capable of receiving an 802.11 frame, and the 802.11 protocol and the TCP/IP protocol need to be added to the transmission control protocol/internet protocol (Transmission Control Protocol/Internet Protocol, TCP/IP). In addition, network access authentication and a secure boot function are added to a communication function.

In this embodiment of this application, the IoT device may be an intelligent device having a function of accessing a WLAN wirelessly. Communication within the IoT device may use another possible communication technology such as Wi-Fi or Bluetooth.

FIG. 7 is a schematic flowchart of a method 700 for automatically accessing a WLAN by an IoT device for an initial time according to an embodiment of this application. As shown in FIG. 7, the method 700 for automatically accessing a WLAN by an IoT device according to this embodiment of this application includes the following steps. 701: The IoT device listens to a beacon frame sent by a wireless access point 1, where the beacon frame carries an SSID 1 and indication information 1, and the indication information 1 is used to indicate the IoT device to access a WLAN 1 identified by the SSID 1.

After being powered on, the IoT device listens to the beacon frame periodically sent by the wireless access point 1. The beacon frame is a regular wireless signal (similar to a heartbeat packet) sent by the wireless access point at a specified interval, and is mainly used for positioning and synchronization. The beacon frame is also referred to as a beacon frame. The beacon frame carries the SSID 1 and the indication information 1. The indication information 1 is used to indicate the IoT device to access the WLAN 1 identified by the SSID 1.

In this case, there are the following possible implementations in which the wireless access point 1 carries the indication information 1 by using the beacon frame.

In a possible implementation, the wireless access point 1 carries the indication information 1 by using an extended field of the beacon frame. Specifically, the extended field may be an extended element field or an extended feature field. For example, when a definition format of the indication information 1 may be defined according to the 802.11 standard and is the extended element field, an example solution of the extended field added to the indication information 1 may be shown in Table 1.

**Table 1**

| | | | |
|---|---|---|---|
| Element ID | Length | exTention | Information |

That is, the extended field includes a 1 -byte element ID, a 1-byte length, 0-byte or 1-byte exTention, and variablebyte information. The element ID is used to indicate that the extended field carries the indication information 1 (A value may be defined as 222). The length is used to indicate a length of the extended field. The exTention is used to indicate whether the extended field has other extended information. The information is used to indicate other information carried in the extended field, for example, carried access procedure information, also referred to as a "version number", used to indicate the IoT device to access the wireless access point 1. For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

When a definition format of the indication information 1 may be defined according to the 802.11 standard and is the extended feature field, an example solution of the extended field added to the indication information 1 may be shown in Table 2.

**Table 2**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

To be specific, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the indication information 1 (a value may be defined as 222). The length is used to indicate a length of the extended feature field. The feature information is used to indicate other information carried in the extended feature field, for example, access procedure information, also referred to as a "version number", used to indicate the IoT device to access the wireless access point 1. For example, when the version number is 1.0, it indicates an access procedure in which the IoT device accesses the wireless access point. When the version number is 2.0, it indicates another access procedure in which the IoT device accesses the wireless access point. There may be both different parts and same parts in the two access procedures.

In another possible implementation, the wireless access point 1 carries the indication information 1 by extending a reserved field of the beacon frame. For example, if a field that is of the reserved field of the beacon frame and in which no related information is configured is used, the wireless access point 1 may indicate, when a value of the field is 1, the IoT device to access the WLAN 1 corresponding to the SSID 1 when receiving the beacon frame.

In another possible implementation, the wireless access point 1 carries the indication information 1 by extending an extended extention field that is of the beacon frame and that carries an element field of the SSID 1. For example, the extention field that is of the beacon frame and that is used to carry the element field of the SSID 1 has no value. In this case, the wireless access point 1 may configure the extention field, which is configured to indicate the IoT device to access the WLAN 1 identified by the SSID 1. In this case, the extention field may be set to 1 or 0. This is not specifically limited herein.

In this embodiment, the indication information 1 may be referred to as a network descriptor (Network Description, ND).

702: The IoT device sends an access request 1 to the wireless access point 1 based on the indication information 1. After receiving the beacon frame, the IoT device parses the beacon frame to obtain the indication information 1. Then, the IoT device sends, based on the indication information 1, the access request 1 to the wireless access point 1 that belongs to the WLAN 1 identified by the SSID 1.

703: The wireless access point 1 receives the access request 1, and completes access authentication with the IoT device.

The wireless access point 1 receives the access request 1 of the IoT device, and verifies an authentication manner and authentication information. If the verification succeeds, the wireless access point 1 and the IoT device complete the access authentication.

It may be understood that a manner in which the wireless access point 1 and the IoT device implements the authentication includes but is not limited to the following several possible implementations: open-system authentication (open-system authentication), shared-key authentication (shared-key authentication), WPAPSK (Pre-shared key) authentication, and 8021.1X EAP authentication.

In this embodiment, the beacon frame sent by the wireless access point 1 directly carries the indication information for triggering the IoT device to access the WLAN identified by the SSID. Therefore, a process in which the IoT device manually configures a corresponding SSID from a plurality of SSIDs is omitted, and a function of automatically accessing the WLAN is implemented. Further, operation workload of network operation personnel is reduced, and enterprise costs are reduced. In addition, an existing packet in an access process is used to carry the indication information, so that signaling overheads can be reduced. The IoT device passively obtains access information of a wireless network, so that the IoT device can be in a power saving mode.

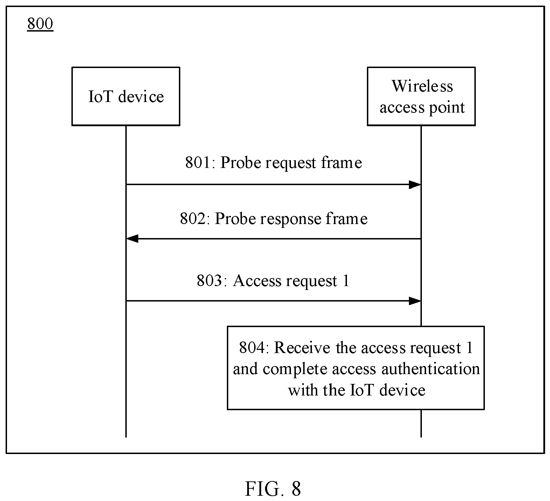

FIG. 8 is a schematic flowchart of a method 800 for automatically accessing a WLAN by an IoT device for an initial time according to an embodiment of this application. As shown in FIG. 8, the method 800 for automatically accessing a WLAN by an IoT device according to this embodiment of this application includes the following steps. 801: The IoT device sends a probe request frame to the wireless access point 1.

After being powered on, the IoT device initiates the probe request (Probe Request) frame with a wireless access point 1, to request the wireless access point 1 to send corresponding access information. That is, the IoT device periodically sends the probe request (Probe Request) frame in a channel list supported by the IoT device, to scan a wireless network.

802: The wireless access point 1 sends a probe response frame to the IoT device, where the probe response frame carries an SSID 1 and indication information 1, and the indication information 1 is used to indicate the IoT device to access a WLAN 1 identified by the SSID 1.

After the wireless access point 1 receives the probe request frame sent by the IoT device, the wireless access point 1 sends the probe response frame (for example, the probe response frame, also referred to as a probe response frame) to the IoT device. In addition, the probe response frame carries the SSID 1 and the indication information 1. The indication information 1 is used to indicate the IoT device to access the WLAN 1 identified by the SSID 1. That is, after receiving the probe request frame, the wireless access point replies with the probe response (Probe Response) frame to announce wireless network information that can be provided. The IoT device may actively learn an available wireless service through active scanning.

In this case, there may be the following possible implementations in which the wireless access point 1 carries the indication information 1 by using the probe response frame.

In a possible implementation, the wireless access point 1 carries the indication information 1 by using an extended field of the probe response frame. Specifically, the extended field may be an extended element field or an extended feature feature field. For example, when a definition format of the indication information 1 may be defined according to the 802.11 standard and is the extended element field, an example solution of the extended field added to the indication information 1 may be shown in Table 3.

**Table 3**

| | | | |
|---|---|---|---|
| Element ID | Length | exTention | Information |

That is, the extended field includes a 1 -byte element ID, a 1-byte length, 0-byte or 1-byte exTention, and variablebyte information. The element ID is used to indicate that the extended field carries the indication information 1 (A value may be defined as 222). The length is used to indicate a length of the extended field. The exTention is used to indicate whether the extended field has other extended information. The information is used to indicate other information carried in the extended field, for example, carried access procedure information, also referred to as a "version number", used to indicate the IoT device to access the wireless access point 1. For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

When a definition format of the indication information 1 may be defined according to the 802.11 standard and is the extended feature field, an example solution of the extended field added to the indication information 1 may be shown in Table 4.

**Table 4**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

That is, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the indication information 1 (A value may be defined as 222). The length is used to indicate a length of the extended feature field. The feature information is used to indicate other information carried in the extended feature field, for example, carried access procedure information used to indicate the IoT device to access the wireless access point 1. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

In another possible implementation, the wireless access point 1 carries the indication information 1 by extending a reserved field of the probe response frame. For example, if a field that is of the reserved field of the probe response frame and in which no related information is configured is used, the wireless access point 1 may indicate: when a value of the field is 1, the IoT device to access the WLAN 1 corresponding to the SSID 1 when receiving the probe response frame.

In another possible implementation, the wireless access point 1 carries the indication information 1 by extending an extended extention field that is of the probe response frame and that carries an element field of the SSID 1. For example, the extention field that is of the probe response frame and that is used to carry the element field of the SSID 1 has no value. In this case, the wireless access point 1 may configure the extention field, which is configured to indicate the IoT device to access the WLAN 1 identified by the SSID 1. In this case, the extention field may be set to 1 or 0. This is not specifically limited herein.

In this embodiment, the indication information 1 may be referred to as a network descriptor (Network Description, ND).

803: The IoT device sends an access request to the wireless access point 1 based on the indication information 1.

After receiving the probe response frame, the IoT device parses the probe response frame to obtain the indication information 1. Then, the IoT device sends, based on the indication information 1, the access request 1 to the wireless access point 1 that belongs to the WLAN 1 identified by the SSID 1.

804: The wireless access point 1 receives the access request 1, and completes access authentication with the IoT device.

The wireless access point 1 responds to the access request 1 of the IoT device, and verifies an authentication manner and authentication information. If the verification succeeds, the wireless access point 1 and the IoT device complete the access authentication.

It may be understood that a manner in which the wireless access point 1 and the IoT device implements the authentication includes but is not limited to the following several possible implementations: open-system authentication (open-system authentication), shared-key authentication (shared-key authentication), WPAPSK (Pre-shared key) authentication, and 8021.1X EAP authentication.

In this embodiment, the probe response frame sent by the wireless access point 1 directly carries the indication information for triggering the IoT device to access the WLAN identified by the SSID. Therefore, a process in which the IoT device manually configures a corresponding SSID from a plurality of SSIDs is omitted, and a function of automatically accessing the WLAN is implemented. Further, operation workload of network operation personnel is reduced, and enterprise costs are reduced. In addition, an existing packet in an access process is used to carry the indication information, so that signaling overheads can be reduced. The IoT device actively sends the probe request frame to the wireless access point, so that access information of a wireless network can be more effectively obtained.

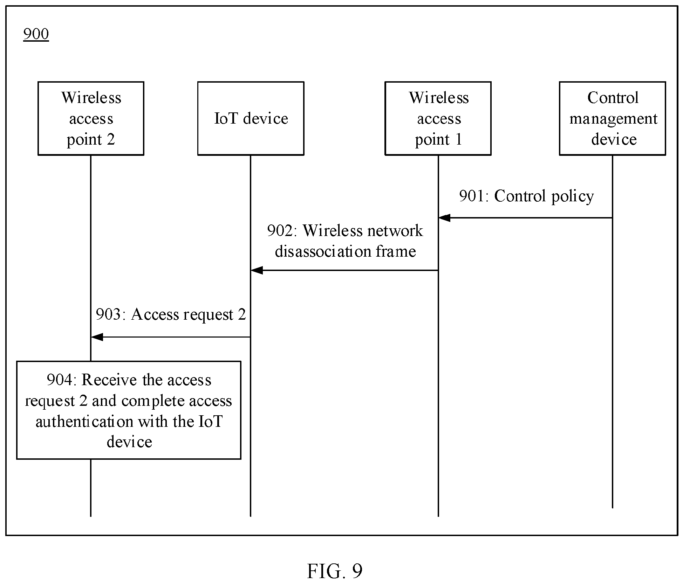

In a specific embodiment, based on the initial access methods in FIG. 7 and FIG. 8, a method for automatically accessing a WLAN by an IoT device provided in this embodiment of this application further includes a schematic diagram of a secondary access procedure shown in FIG. 9. As shown in FIG. 9, the method 900 for automatically accessing a WLAN by an IoT device according to this embodiment of this application includes the following steps. 901: A wireless access point 1 obtains a control policy sent by a control management device, where the control policy carries an SSID 2 accessed by the IoT device for a secondary time.

In a process in which the wireless access point 1 performs access authentication with the IoT device, the wireless access point 1 exchanges authorization information with the control management device, and the wireless access point 1 receives the control policy sent by the control management device. The control policy is used to indicate the SSID 2 and indication information 2 accessed by the IoT device for the secondary time, that is, used to indicate a service SSID that the IoT device really needs to access, and the indication information 2 used to trigger the IoT device to automatically access a WLAN 2 identified by the SSID 2.

902: The wireless access point 1 sends a wireless network disassociation frame to the IoT device, where the wireless network disassociation frame carries the SSID 2 and the indication information 2, and the indication information 2 is used to indicate the IoT device to access the WLAN 2 identified by the SSID 2.

The wireless access point 1 sends the wireless network disassociation frame (for example, a disassociate frame or a deauth frame) to the IoT device according to the control policy. The wireless network disassociation frame carries the SSID 2 accessed by the IoT device for the secondary time and a related access parameter. The access parameter includes authentication information and encryption information. The authentication information includes an authentication manner. The authentication manner includes but is not limited to open-system authentication (open-system authentication), shared-key authentication (shared-key authentication), WPA PSK (Pre-shared key) authentication, and 8021.1X EAP authentication.

In this case, the wireless access point 1 may use the following possible implementations to carry the indication information 2 by using the wireless network disassociation frame.

In a possible implementation, the wireless access point 1 carries the indication information 2 by using an extended field of the wireless network disassociation frame. Specifically, the extended field may be an extended element field or an extended feature feature field. For example, when a definition format of the indication information 1 may be defined according to the 802.11 standard and is the extended element field, an example solution of the extended field added to the indication information 1 may be shown in Table 5.

**Table 5**

| | | | |
|---|---|---|---|
| Element ID | Length | exTention | Information |

That is, the extended field includes a 1 -byte element ID, a 1-byte length, 0-byte or 1-byte exTention, and variablebyte information. The element ID is used to indicate that the extended field carries the indication information 1 (A value may be defined as 222). The length is used to indicate a length of the extended field. The exTention is used to indicate whether the extended field has other extended information. The information is used to indicate other information carried in the extended field. For example, the extended field carries the SSID 2 accessed by the IoT device for the secondary time, the access parameter, and access procedure information used to indicate the IoT device to access the wireless access point 1. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

When a definition format of the indication information 1 may be defined according to the 802.11 standard and is the extended feature field, an example solution of the extended field added to the indication information 1 may be shown in Table 6.

**Table 6**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

That is, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the indication information 1 (A value may be defined as 222). The length is used to indicate a length of the extended feature field. The feature information is used to indicate other information carried in the extended feature field. For example, the extended field carries the SSID 2 accessed by the IoT device for the secondary time, the access parameter, and access procedure information used to indicate the IoT device to access the wireless access point 1. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

In this embodiment, the indication information 2 may be referred to as a Second Access Description (Second Access Description, SAD).

903: The IoT device sends an access request 2 to a wireless access point 2 based on the indication information 2. After receiving the wireless network disassociation frame, the IoT device parses the wireless network disassociation frame to obtain the indication information 2. The IoT device is disassociated from the wireless access point 1, and sends, based on the indication information 2, the access request 2 to the wireless access point 2 that belongs to the WLAN 2 identified by the SSID 2.

904: The wireless access point 2 receives the access request 2, and completes access authentication with the IoT device.

The wireless access point 2 responds to the access request 2 of the IoT device, and verifies an authentication manner and authentication information. If the verification succeeds, the wireless access point 2 and the IoT device complete the access authentication.

It may be understood that a manner in which the wireless access point 2 and the IoT device implements the authentication includes but is not limited to the following several possible implementations: open-system authentication (open-system authentication), shared-key authentication (shared-key authentication), WPAPSK (pre-shared key) authentication, and 802.1X EAP authentication.

In this embodiment, when the wireless access point 1 has accessed a wireless network, the wireless access point 1 may further obtain, from the control management device, the SSID that the IoT device accesses for the secondary time and the indication information. The wireless access point 1 sends the wireless disassociation frame to the IoT device, to trigger the IoT device to access, for the secondary time, the WLAN identified by the SSID. This avoids a process of manually configuring the SSID that the IoT device accesses for the secondary time, and implements a function of automatically accessing a WLAN. Further, operation workload of network operation personnel is reduced, and enterprise costs are reduced. In addition, an existing packet in an access process is used to carry the indication information, so that signaling overheads can be reduced.

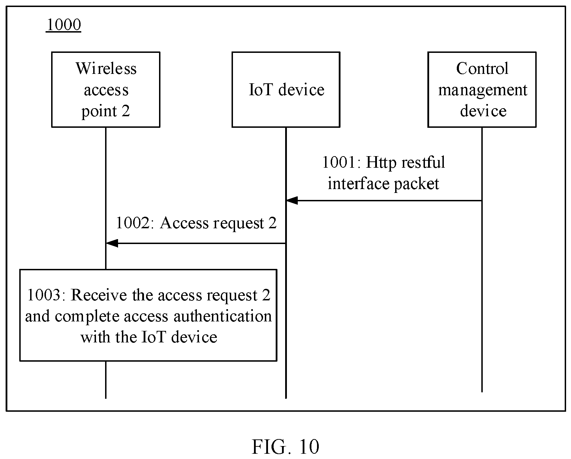

FIG. 10 is a schematic flowchart of a method 1000 for automatically accessing a WLAN by an IoT device according to an embodiment of this application. As shown in FIG. 10, the method 1000 for automatically accessing a WLAN by an IoT device according to this embodiment of this application includes the following steps.

1001: A control management device sends an http restful interface packet to the IoT device, where the http restful interface packet carries an SSID 2 and indication information 2, and the indication information 2 is used to indicate the IoT device to access a WLAN 2 identified by the SSID 2.

The control management device sends, to the IoT device by using the http restful interface packet, the SSID 2 that is accessed for a secondary time and a related access parameter. The access parameter includes authentication information and encryption information. The authentication information includes an authentication manner. The authentication manner includes but is not limited to open-system authentication, shared-key authentication, WPA PSK authentication, and 8021.1X EAP authentication.

In this case, the control management device may use the following several possible implementations to carry the indication information 2 by using the http restful interface packet.

In a possible implementation, the control management device carries the indication information 2 by using an extended field of the http restful interface packet. Specifically, the extended field may be an extended element field or an extended feature feature field. For example, when a definition format of the indication information 1 may be defined according to the 802.11 standard and is the extended element field, an example solution of the extended field added to the indication information 1 may be shown in Table 7.

**Table 7**

| | | | |
|---|---|---|---|
| Element ID | Length | exTention | Information |

That is, the extended field includes a 1 -byte element ID, a 1-byte length, 0-byte or 1-byte exTention, and variablebyte information. The element ID is used to indicate that the extended field carries the indication information 1 (A value may be defined as 222). The length is used to indicate a length of the extended field. The exTention is used to indicate whether the extended field has other extended information. The information is used to indicate other information carried in the extended field. For example, the extended field carries the SSID 2 accessed by the IoT device for the secondary time, the access parameter, and access procedure information used to indicate the IoT device to access the control management device. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

When a definition format of the indication information 1 may be defined according to the 802.11 standard and is the extended feature field, an example solution of the extended field added to the indication information 1 may be shown in Table 8.

**Table 8**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

That is, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the indication information 1 (A value may be defined as 222). The length is used to indicate a length of the extended feature field. The feature information is used to indicate other information carried in the extended feature field. For example, the extended field carries the SSID 2 accessed by the IoT device for the secondary time, the access parameter, and access procedure information used to indicate the IoT device to access the control management device. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

In this embodiment, the indication information 2 may be referred to as a second access information descriptor (Second Access Description, SAD).

1002: The IoT device sends an access request 2 to a wireless access point 2 based on the indication information 2. After receiving the http restful interface packet, the IoT device parses the http restful interface packet to obtain the indication information 2. The IoT device is disassociated from the wireless access point 1, and sends, based on the indication information 2, the access request 2 to the wireless access point 2 that belongs to the WLAN 2 identified by the SSID 2.

1003: The wireless access point 2 receives the access request 2, and completes access authentication with the IoT device.

The wireless access point 2 responds to the access request 2 of the IoT device, and verifies an authentication manner and authentication information. If the verification succeeds, the wireless access point 2 and the IoT device complete the access authentication.

It may be understood that a manner in which the wireless access point 2 and the IoT device implements the authentication includes but is not limited to the following several possible implementations: open-system authentication, shared-key authentication, WPA PSK authentication, and 8021.1X EAP authentication.

In this embodiment, when the wireless access point 1 has accessed a wireless network, the control management device directly sends, to the IoT device by using the http restful interface packet, the SSID that is accessed for the secondary time and the indication information, to trigger the IoT device to dissociate with the wireless access point 1 and access, for the secondary time, the WLAN identified by the SSID. This avoids a process of manually configuring the SSID that the IoT device accesses for the secondary time, and implements a function of automatically accessing a WLAN. Further, operation workload of network operation personnel is reduced, and enterprise costs are reduced. In addition, an existing packet in an access process is used to carry the indication information, so that signaling overheads can be reduced.

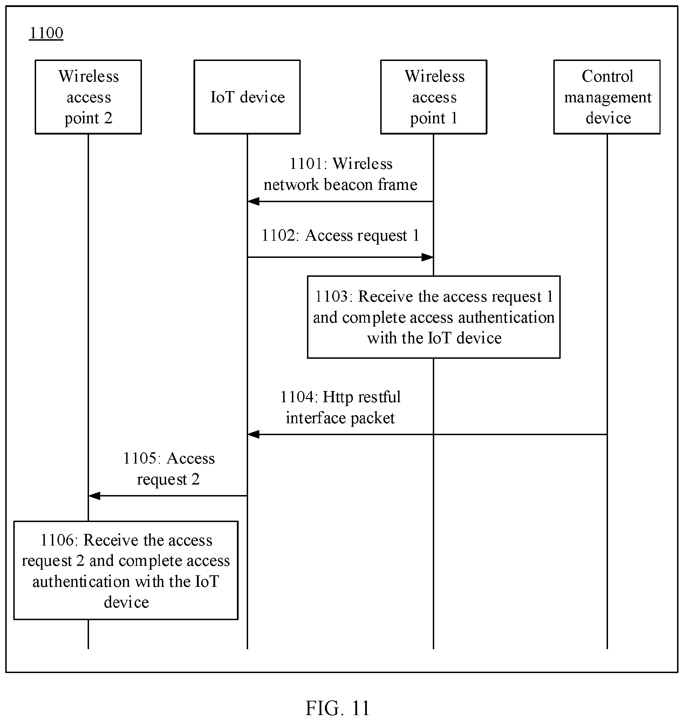

FIG. 11 is a schematic flowchart of a method 1100 for automatically accessing a WLAN by an IoT device according to an embodiment of this application. In the schematic flowchart shown in FIG. 11, a process in which the IoT device automatically accesses the WLAN includes initial access and secondary access. As shown in FIG. 7, the method 1100 for automatically accessing a WLAN by an IoT device according to this embodiment of this application includes the following steps.

1101: The IoT device obtains a beacon frame sent by a wireless access point 1, where the beacon frame carries an SSID 1 and indication information 1, and the indication information 1 is used to indicate the IoT device to access a WLAN 1 identified by the SSID 1.

After being powered on, the IoT device listens to the beacon frame periodically sent by the wireless access point 1. The beacon frame is a regular wireless signal (similar to a heartbeat packet) sent by the wireless access point at a specified interval, and is mainly used for positioning and synchronization. The beacon frame is also referred to as a beacon frame. The beacon frame carries the SSID 1 and the indication information 1. The indication information 1 is used to indicate the IoT device to access the WLAN 1 identified by the SSID 1.

In this case, the wireless access point 1 may use the following possible implementations to carry the indication information 1 by using the beacon frame.

In a possible implementation, the wireless access point 1 carries the indication information 1 by using an extended field of the beacon frame. Specifically, the extended field may be an extended element field or an extended feature feature field. For example, when a definition format of the indication information 1 may be defined according to the 802.11 standard and is the extended element field, an example solution of the extended field added to the indication information 1 may be shown in Table 9.

**Table 9**

| | | | |
|---|---|---|---|
| Element ID | Length | exTention | Information |

That is, the extended field includes a 1 -byte element ID, a 1 -byte length, 0-byte or 1 -byte exTention, and variablebyte information. The element ID is used to indicate that the extended field carries the indication information 1 (A value may be defined as 222). The length is used to indicate a length of the extended field. The exTention is used to indicate whether the extended field has other extended information. The information is used to indicate other information carried in the extended field, for example, carried access procedure information used to indicate the IoT device to access the wireless access point 1.

When a definition format of the indication information 1 may be defined according to the 802.11 standard and is the extended feature field, an example solution of the extended field added to the indication information 1 may be shown in Table 10.

**Table 10**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

That is, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the indication information 1 (A value may be defined as 222). The length is used to indicate a length of the extended feature field. The feature information is used to indicate other information carried in the extended feature field, for example, carried access procedure information used to indicate the IoT device to access the wireless access point 1, which may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

In another possible implementation, the wireless access point 1 carries the indication information 1 by extending a reserved field of the beacon frame. For example, if a field that is of the reserved field of the beacon frame and in which no related information is configured is used, the wireless access point 1 may indicate: When a value of the field is 1, the IoT device accesses the WLAN 1 corresponding to the SSID 1 when receiving the beacon frame.

In another possible implementation, the wireless access point 1 carries the indication information 1 by extending an extended extention field that is of the beacon frame and that carries an element field of the SSID 1. For example, the extention field that is of the beacon frame and that is used to carry the element field of the SSID 1 has no value. In this case, the wireless access point 1 may configure the extention field, which is configured to indicate the IoT device to access the WLAN 1 identified by the SSID 1. In this case, the extention field may be set to 1 or 0. This is not specifically limited herein.

In this embodiment, the indication information 1 may be referred to as a network descriptor (Network Description, ND).

1102: The IoT device sends an access request 1 to the wireless access point 1 based on the indication information 1. After receiving the beacon frame, the IoT device parses the beacon frame to obtain the indication information 1. Then, the IoT device sends, based on the indication information 1, the access request 1 to the wireless access point 1 that belongs to the WLAN 1 identified by the SSID 1.

1103: The wireless access point 1 receives the access request 1, and completes access authentication with the IoT device.

The wireless access point 1 responds to the access request 1 of the IoT device, and verifies an authentication manner and authentication information. If the verification succeeds, the wireless access point 1 and the IoT device complete the access authentication.

It may be understood that a manner in which the wireless access point 1 and the IoT device implements the authentication includes but is not limited to the following several possible implementations: open-system authentication, shared-key authentication, WPA PSK authentication, and 8021.1X EAP authentication.

1104: A controller sends an http restful interface packet to the IoT device, where the http restful interface packet carries an SSID 2 and indication information 2, and the indication information 2 is used to indicate the IoT device to access a WLAN 2 identified by the SSID 2.

The control management device sends, to the IoT device by using the http restful interface packet, the SSID 2 that is accessed for a secondary time and a related access parameter. The access parameter includes authentication information and encryption information. The authentication information includes an authentication manner. The authentication manner includes but is not limited to open-system authentication, shared-key authentication, WPA PSK authentication, and 8021.1X EAP authentication.

In this case, the control management device may use the following several possible implementations to carry the indication information 2 by using the http restful interface packet.

In a possible implementation, the control management device carries the indication information 2 by using an extended field of the http restful interface packet. Specifically, the extended field may be an extended element field or an extended feature feature field. For example, when a definition format of the indication information 1 may be defined according to the 802.11 standard and is the extended element field, an example solution of the extended field added to the indication information 1 may be shown in Table 11.

**Table 11**

| | | | |
|---|---|---|---|
| Element ID | Length | exTention | Information |

That is, the extended field includes a 1 -byte element ID, a 1-byte length, 0-byte or 1-byte exTention, and variablebyte information. The element ID is used to indicate that the extended field carries the indication information 1 (A value may be defined as 222). The length is used to indicate a length of the extended field. The exTention is used to indicate whether the extended field has other extended information. The information is used to indicate other information carried in the extended field. For example, the extended field carries the SSID 2 accessed by the IoT device for the secondary time, the access parameter, and access procedure information used to indicate the IoT device to access the control management device. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

When a definition format of the indication information 1 may be defined according to the 802.11 standard and is the extended feature field, an example solution of the extended field added to the indication information 1 may be shown in Table 12.

**Table 12**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

That is, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the indication information 1 (A value may be defined as 222). The length is used to indicate a length of the extended feature field. The feature information is used to indicate other information carried in the extended feature field. For example, the extended field carries the SSID 2 accessed by the IoT device for the secondary time, the access parameter, and access procedure information used to indicate the IoT device to access the control management device. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

In this embodiment, the indication information 2 may be referred to as a second access information descriptor (Second Access Description, SAD).

1105: The IoT device sends an access request 2 to a wireless access point 2 based on the indication information 2. After receiving the http restful interface packet, the IoT device parses the http restful interface packet to obtain the indication information 2. The IoT device is disassociated from the wireless access point 1, and sends, based on the indication information 2, the access request 2 to the wireless access point 2 that belongs to the WLAN 2 identified by the SSID 2.

1106: The wireless access point 2 receives the access request 2, and completes access authentication with the IoT device.

The wireless access point 2 responds to the access request 2 of the IoT device, and verifies an authentication manner and authentication information. If the verification succeeds, the wireless access point 2 and the IoT device complete the access authentication.

It may be understood that a manner in which the wireless access point 2 and the IoT device implements the authentication includes but is not limited to the following several possible implementations: open-system authentication, shared-key authentication, WPA PSK authentication, and 8021.1X EAP authentication.

In this embodiment, during initial access, the beacon frame sent by the wireless access point 1 directly carries the indication information for triggering the IoT device to access the WLAN identified by the SSID. Therefore, a process in which the IoT device manually configures a corresponding SSID from a plurality of SSIDs is omitted, and a function of automatically accessing the WLAN by the IoT device is implemented during initial access. When the wireless access point 1 has accessed a wireless network, the control management device directly sends, to the IoT device by using the http restful interface packet, the SSID that is accessed for the secondary time and the indication information, to trigger the IoT device to dissociate with the wireless access point 1 and access, for the secondary time, the WLAN identified by the SSID. This avoids a process of manually configuring the SSID that the IoT device accesses for the secondary time, and implements a function of automatically accessing a WLAN by the IoT device. Further, operation workload of network operation personnel is reduced, and enterprise costs are reduced. In addition, an existing packet in an access process is used to carry the indication information, so that signaling overheads can be reduced.

It may be understood that FIG. 11 is merely an example solution in which the IoT device completes the initial access and the secondary access. A method for automatically accessing a WLAN by an IoT device may be a combination of any solution in FIG. 7 or FIG. 8 and any solution in FIG. 9 or FIG. 10. This is not specifically limited herein. In addition, when the IoT device performs the secondary access, the WLAN 2 identified by the SSID 2 and the WLAN 1 may be a same wireless network. In this case, when the IoT device performs the secondary access, the IoT device may continue to maintain current access or re-access the wireless access point 1 after the IoT device is disassociated from the wireless access point 1. A specific operation method is not limited herein.

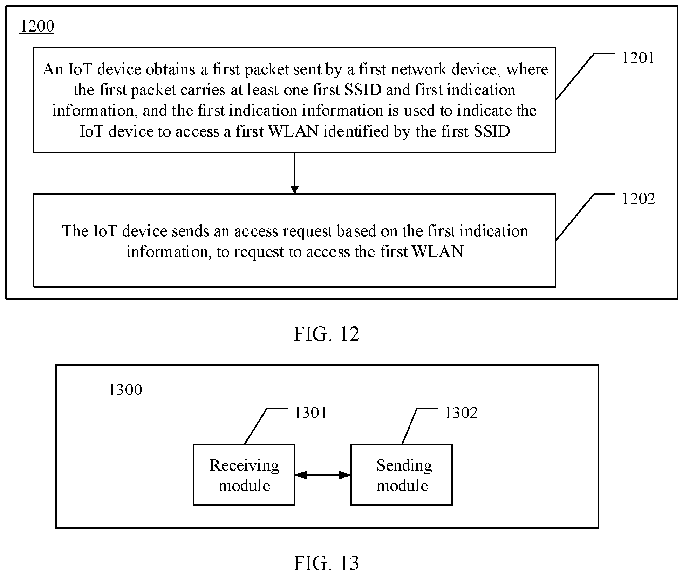

FIG. 12 is a schematic flowchart of a method 1200 for automatically accessing a WLAN by an IoT device according to an embodiment of this application. As shown in FIG. 12, the method 1200 for automatically accessing a WLAN by an IoT device according to this embodiment of this application includes the following steps.

1201: The IoT device obtains a first packet sent by a first network device, where the first packet carries at least one first SSID and first indication information, and the first indication information is used to indicate the IoT device to access a first WLAN identified by the first SSID.

In this embodiment, the following scenarios are included. 1. When the IoT device accesses the WLAN for an initial time, the first network device is a wireless access point (that is, equivalent to the wireless access point 1 in FIG. 7 to FIG. 11), and the first packet may be the beacon frame or the probe response frame in FIG. 7 to FIG. 11. Then, the first indication information (the first indication information may be corresponding to the indication information 1 in FIG. 7 to FIG. 11) carried in the first packet received by the IoT device is used to indicate the IoT device to access, for the initial time, the first WLAN (the first WLAN may be corresponding to the WLAN 1 in FIG. 7 to FIG. 11) identified by the first SSID (the first SSID may be corresponding to the SSID 1 in FIG. 7 to FIG. 11).

The first packet may carry the first indication information in the following possible implementations.

In a possible implementation, the first network device carries the first indication information by using an extended field of the first packet. Specifically, the extended field may be an extended element field or an extended feature feature field. For example, when a definition format of the first indication information may be defined according to the 802.11 standard and is the extended element field, an example solution of the extended field added to the first indication information may be shown in Table 13.

**Table 13**

| | | | |
|---|---|---|---|
| Element ID | Length | exTention | Information |

That is, the extended field includes a 1 -byte element ID, a 1-byte length, 0-byte or 1-byte exTention, and variablebyte information. The element ID is used to indicate that the extended field carries the first indication information (A value may be defined as 222). The length is used to indicate a length of the extended field. The exTention is used to indicate whether the extended field has other extended information. The information is used to indicate other information carried in the extended field, for example, carried access procedure information used to indicate the IoT device to access the first network device.

When a definition format of the first indication information may be defined according to the 802.11 standard and is the extended feature field, an example solution of the extended field added to the first indication information may be shown in Table 14.

**Table 14**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

That is, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the first indication information (A value may be defined as 222). The length is used to indicate a length of the extended feature field. The feature information is used to indicate other information carried in the extended feature field, for example, carried access procedure information used to indicate the IoT device to access the first network device, which may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

In another possible implementation, the first network device carries the first indication information by extending a reserved field of the first packet. For example, if a field that is of the reserved field of the first packet and in which no related information is configured is used, the first network device may indicate: When a value of the field is 1, the IoT device accesses the WLAN 1 corresponding to the SSID 1 when receiving the first packet.

In another possible implementation, the first network device carries the first indication information by extending an extension extention field that is of the first packet and that carries an element field of the SSID 1. For example, the extention field that is of the first packet and that is used to carry the element field of the SSID 1 has no value. In this case, the first network device may configure the extention field, which is configured to indicate the IoT device to access the WLAN 1 identified by the SSID 1. In this case, the extention field may be set to 1 or 0. This is not specifically limited herein.

In this embodiment, the first indication information may be referred to as a network descriptor (Network Description, ND). 2. When the IoT device accesses the WLAN for a secondary time, the first network device is the wireless access point or a control management device (that is, equivalent to the wireless access point 1 or the control management device in FIG. 7 to FIG. 11), and the first packet may be the wireless network disassociation frame or the http restful interface packet in FIG. 7 to FIG. 11. Then, the first indication information (the first indication information may be corresponding to the indication information 2 in FIG. 7 to FIG. 11) carried in the first packet received by the IoT device is used to indicate the IoT device to access, for the initial time, the first WLAN (the first WLAN may be corresponding to the WLAN 2 in FIG. 7 to FIG. 11) identified by the first SSID (the first SSID may be corresponding to the SSID 2 in FIG. 7 to FIG. 11).

The first packet may carry the first indication information in the following possible implementations.

In a possible implementation, the first network device carries the first indication information by using an extended field of the first packet. Specifically, the extended field may be an extended element field or an extended feature feature field. For example, when a definition format of the first indication information may be defined according to the 802.11 standard and is the extended element field, an example solution of the extended field added to the first indication information may be shown in Table 15.

**Table 15**

| | | | |
|---|---|---|---|
| Element ID | Length | exTention | Information |

That is, the extended field includes a 1 -byte element ID, a 1 -byte length, 0-byte or 1 -byte exTention, and variablebyte information. The element ID is used to indicate that the extended field carries the first indication information (A value may be defined as 222). The length is used to indicate a length of the extended field. The exTention is used to indicate whether the extended field has other extended information. The information is used to indicate other information carried in the extended field. For example, the extended field carries the SSID 2 accessed by the IoT device for the secondary time, the access parameter, and access procedure information used to indicate the IoT device to access the first network device. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

When a definition format of the first indication information may be defined according to the 802.11 standard and is the extended feature field, an example solution of the extended field added to the first indication information may be shown in Table 16.

**Table 16**

| Element ID | Length | Organization identifier information | | | Vendor specific IE | | |
|---|---|---|---|---|---|---|---|
| 221 | | 0 | E0 | FC | | | |
| | | HUAWEI | | | Feature ID | Feature length | Feature information |

That is, in the extended field, the element ID is used to indicate that the extended field is a feature field (for example, a vendor-defined field). The length is used to indicate a length of the extended field. The organization identifier information is used to indicate a user name to which the extended field belongs. The feature ID is used to indicate that the extended feature field carries the first indication information (A value may be defined as 222). The length is used to indicate a length of the extended feature field. The feature information is used to indicate other information carried in the extended feature field. For example, the extended field carries the SSID 2 accessed by the IoT device for the secondary time, the access parameter, and access procedure information used to indicate the IoT device to access the first network device. The access procedure information may also be referred to as a "version number". For example, when the version number is 1.0, this is corresponding to an access procedure in which the IoT device accesses the wireless access point. When the version number is 2.0, this is corresponding to another access procedure in which the IoT device accesses the wireless access point. There may be both different parts and same parts in the two access procedures.

In this embodiment, the first indication information may be referred to as a second access information descriptor (Second Access Description, SAD).

1202: The IoT device sends an access request based on the first indication information, to request to access the first WLAN.

The foregoing describes the methods for automatically accessing a WLAN by an IoT device in the embodiments of this application. The following describes the IoT device and the network device in the embodiments of this application.

Specifically, referring to FIG. 13, an IoT device 1300 in this embodiment of this application includes a receiving module 1301 and a sending module 1302. The device 1300 may be the IoT device in the foregoing method embodiments, or may be one or more chips in the IoT device. The device 1300 may be configured to perform some or all functions of the IoT device in the foregoing method embodiments.

For example, the receiving module 1301 may be configured to perform step 701, step 801, step 902, step 1001, or step 1101 and step 1104 in the foregoing method embodiments. For example, the receiving module 1301 obtains a first packet sent by a first network device. The first packet carries at least one first service set identifier SSID and first indication information, and the first indication information is used to indicate the IoT device to access a first wireless local area network WLAN identified by the first SSID.

The sending module 1302 may be configured to perform step 702, step 802, step 903, step 1002, or step 1102 and step 1105 in the foregoing method embodiments. For example, the sending module 1302 sends a first access request based on the first indication information, to request to access the first WLAN.

Optionally, the device 1300 further includes a storage module. The storage module is coupled to a processing module, so that the processing module is enabled to execute a computer-executable instruction stored in the storage module, to implement functions of the IoT device in the foregoing method embodiments. In an example, the storage module optionally included in the device 1300 may be a storage unit in a chip, for example, a register or a cache. The storage module may be alternatively a storage unit that is located outside the chip, for example, a read-only memory (read-only memory, ROM), another type of static storage device that can store static information and an instruction, or a random access memory (random access memory, RAM).

It should be understood that a procedure performed by the modules of the IoT device in the embodiment corresponding to FIG. 13 is similar to the procedure performed by the IoT device in the method embodiments corresponding to FIG. 7 to FIG. 12. Details are not described herein again.

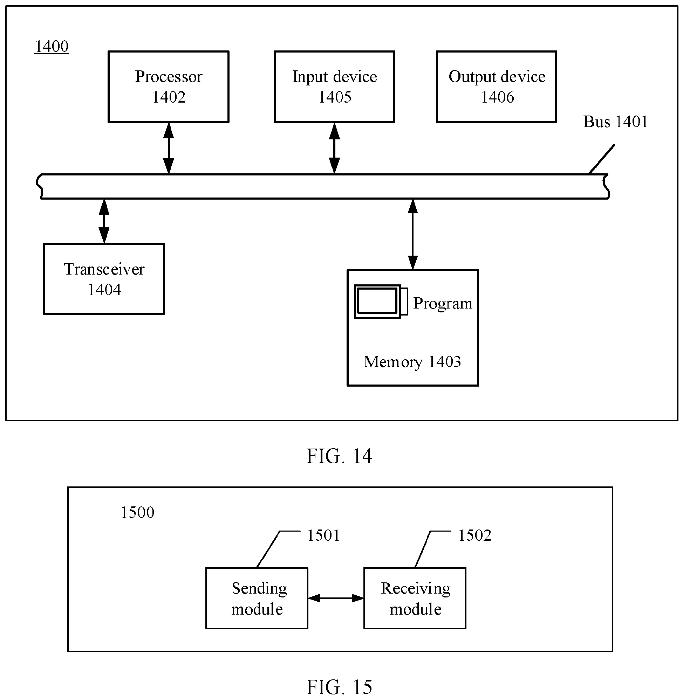

FIG. 14 is a possible schematic structural diagram of an IoT device 1400 according to the foregoing embodiment. The device 1400 may be configured as the foregoing IoT device. The device 1400 may include a processor 1402, a computer-readable storage medium/memory 1403, a transceiver 1404, an input device 1405, an output device 1406, and a bus 1401. The processor, the transceiver, the computer-readable storage medium, and the like are connected through the bus. A specific connection medium between the foregoing components is not limited in the embodiments of this application.

In an example, the transceiver 1404 obtains a first packet sent by a first network device. The first packet carries at least one first service set identifier SSID and first indication information, and the first indication information is used to indicate the IoT device to access a first wireless local area network WLAN identified by the first SSID. The transceiver 1404 sends a first access request based on the first indication information, to request to access the first WLAN.

In an example, the processor 1402 may include a baseband circuit. The processor 1402 may perform data encapsulation, encoding, and the like on request information according to a protocol, to generate the first access request. The transceiver 1404 may include a radio frequency circuit, to perform processing such as modulation and amplification on the first access request, and then send a processed first access request to the network device.

In another example, the processor 1402 may run an operating system to control a function between each device and each component. The transceiver 1404 may include a baseband circuit and a radio frequency circuit. For example, the transceiver 1404 may process request information or data by using the baseband circuit and the radio frequency circuit, and then send processed request information or data to the network device.

The transceiver 1404 and the processor 1402 may implement a corresponding step in any one of the embodiments in FIG. 7 to FIG. 12. Details are not described herein again.

It may be understood that, FIG. 14 merely shows a simplified design of the IoT device. In actual application, the IoT device may include any quantities of transceivers, processors, memories, and the like, and all IoT devices that can implement this application shall fall within the protection scope of this application.

The processor 1402 in the device 1400 may be a general-purpose processor, for example, a general-purpose central processing unit (CPU), a network processor (network processor, NP), or a microprocessor, or may be an application-specific integrated circuit (ASIC), or one or more integrated circuits configured to control program execution in the solutions of this application. Alternatively, the processor 1402 may be a digital signal processor (digital signal processor, DSP), a field programmable gate array (field-programmable gate array, FPGA) or another programmable logic device, a discrete gate or a transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations based on a program instruction stored in the memory.

The bus 1401 may be a peripheral component interconnect (peripheral component interconnect, PCI) bus, an extended industry standard architecture (extended industry standard architecture, EISA) bus, and the like. The bus may be classified into an address bus, a data bus, a control bus, and the like. For ease of representation, only one thick line is used to represent the bus in FIG. 14, but this does not mean that there is only one bus or only one type of bus.

The computer-readable storage medium/memory 1403 may further store an operating system and another application program. Specifically, the program may include program code, and the program code includes a computer operation instruction. More specifically, the memory may be a read-only memory (read-only memory, ROM), another type of static storage device that can store static information and an instruction, a random access memory (random access memory, RAM), another type of dynamic storage device that can store information and an instruction, a magnetic disk memory, or the like. The memory 1403 may be a combination of the foregoing memories. In addition, the computer-readable storage medium/memory may be located in the processor, or may be located outside the processor, or distributed in a plurality of entities including a processor or a processing circuit. The computer-readable storage medium/memory may be specifically embodied in a computer program product. For example, the computer program product may include a computer-readable medium in a packaging material. Alternatively, a universal processing system is provided in this embodiment of this application. For example, the universal processing system is usually referred to as a chip. The universal processing system includes one or more microprocessors that provide a processor function, and an external memory that provides at least a part of a storage medium. All these components are connected to other supporting circuits by using an external bus architecture. When the instruction stored in the memory is executed by the processor, the processor is enabled to perform some or all of the steps in the methods for automatically accessing a WLAN by an IoT device in the embodiments in FIG. 7 to FIG. 12, for example, step 701 to step 702 in FIG. 7, step 801 to step 802 in FIG. 8, step 902 to step 903 in FIG. 9, step 1001 to step 1002 in FIG. 10, and step 1101 to step 1102 and step 1104 to step 1105 in FIG. 11, and/or is configured for another process of the technology described in this application.

The method or algorithm steps described with reference to the content disclosed in this application may be implemented by hardware, or may be implemented by a processor by executing a software instruction. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in the IoT device. Certainly, the processor and the storage medium may exist in user equipment as discrete components.

Specifically, referring to FIG. 15, a network device 1500 in an embodiment of this application includes a sending module 1501 and a receiving module 1502. The device 1500 may be the wireless access point or the control management device in the foregoing method embodiments, or may be one or more chips in the wireless access point or the control management device. The device 1500 may be configured to perform some or all functions of the wireless access point or the control management device in the foregoing method embodiments.

For example, the sending module 1501 may be configured to perform step 701, step 802, step 902, or step 1101 in the foregoing method embodiments. For example, the sending module 1501 sends a first packet to an IoT device. The first packet carries at least one first service set identifier SSID and first indication information, and the first indication information is used to indicate the IoT device to access a first wireless local area network WLAN identified by the first SSID.

The receiving module 1502 may be configured to perform step 701 or step 703 in the foregoing method embodiment, configured to perform step 801, step 803, or step 804 in the foregoing method embodiment, configured to perform step 901 or step 903 in the foregoing method embodiment, or configured to perform step 1102 to step 1103 in the foregoing method embodiment. For example, the receiving module 1502 receives a first access request that is sent by the IoT device for requesting to access the first WLAN.

Optionally, the device 1500 further includes a storage module. The storage module is coupled to a processing module, so that the processing module is enabled to execute a computer-executable instruction stored in the storage module, to implement functions of the wireless access point or the control management device in the foregoing method embodiments. In an example, the storage module optionally included in the device 1500 may be a storage unit in a chip, for example, a register or a cache. The storage module may be alternatively a storage unit that is located outside the chip, for example, a read-only memory (read-only memory, ROM), another type of static storage device that can store static information and an instruction, or a random access memory (random access memory, RAM).

It should be understood that a procedure performed by the modules of the network device in the embodiment corresponding to FIG. 15 is similar to the procedure performed by the wireless access point or the control management device in the method embodiments corresponding to FIG. 7 to FIG. 12. Details are not described herein again.

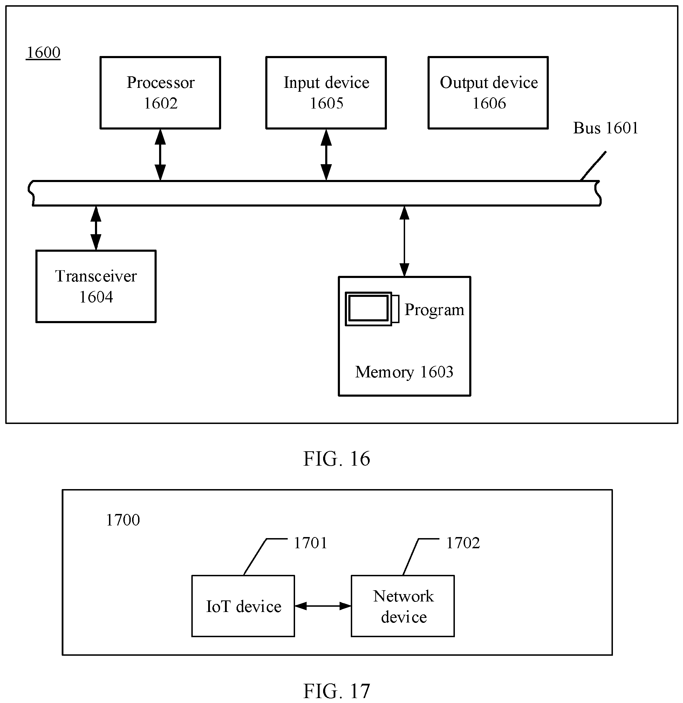

FIG. 16 is a possible schematic structural diagram of a network device 1600 according to the foregoing embodiment. The device 1600 may be configured as the foregoing wireless access point or control management device. The device 1600 may include a processor 1602, a computer-readable storage medium/memory 1603, a transceiver 1604, an input device 1605, an output device 1606, and a bus 1601. The processor, the transceiver, the computer-readable storage medium, and the like are connected through the bus. A specific connection medium between the foregoing components is not limited in the embodiments of this application.

In an example,
the transceiver 1604 sends a first packet to an IoT device. The first packet carries at least one first service set identifier SSID and first indication information, and the first indication information is used to indicate the IoT device to access a first wireless local area network WLAN identified by the first SSID. The transceiver 1604 receives a first access request that is sent by the IoT device for requesting to access the first WLAN.

In an example, the processor 1602 may include a baseband circuit. The processor 1602 may perform data encapsulation, encoding, and the like on the SSID and the indication information according to a protocol, to generate the packet. The transceiver 1604 may include a radio frequency circuit, to perform processing such as modulation and amplification on the packet, and then send a processed packet to the IoT device.

In another example, the processor 1602 may run an operating system to control a function between each device and each component. The transceiver 1604 may include a baseband circuit and a radio frequency circuit. For example, the transceiver 1604 may process the SSID and the indication information by using the baseband circuit and the radio frequency circuit, and then send processed SSID and processed indication information to the IoT device.

The transceiver 1604 and the processor 1602 may implement a corresponding step in any one of the embodiments in FIG. 7 to FIG. 12. Details are not described herein again.

It may be understood that, FIG. 16 merely shows a simplified design of the network device. In actual application, the network device may include any quantities of transceivers, processors, memories, and the like, and all wireless access points or control management devices that can implement this application shall fall within the protection scope of this application.

The processor 1602 in the device 1600 may be a general-purpose processor, for example, a general-purpose central processing unit, a network processor, or a microprocessor, or may be an application-specific integrated circuit, or one or more integrated circuits configured to control program execution in the solutions of this application. Alternatively, the processor 1602 may be a digital signal processor, a field programmable gate array or another programmable logic device, a discrete gate or a transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations based on a program instruction stored in the memory. The bus 1601 mentioned above may be a peripheral component interconnect (peripheral component interconnect, PCI) bus, an extended industry standard architecture (EISA) bus, or the like. The bus may be classified into an address bus, a data bus, a control bus, and the like. For ease of representation, only one thick line is used to represent the bus in FIG. 16, but this does not mean that there is only one bus or only one type of bus.

The computer-readable storage medium/memory 1603 may further store an operating system and another application program. Specifically, the program may include program code, and the program code includes a computer operation instruction. More specifically, the memory may be a read-only memory (read-only memory, ROM), another type of static storage device that can store static information and an instruction, a random access memory (random access memory, RAM), another type of dynamic storage device that can store information and an instruction, a magnetic disk memory, or the like. The memory 1603 may be a combination of the foregoing memories. In addition, the computer-readable storage medium/memory may be located in the processor, or may be located outside the processor, or distributed in a plurality of entities including a processor or a processing circuit. The computer-readable storage medium/memory may be specifically embodied in a computer program product. For example, the computer program product may include a computer-readable medium in a packaging material. Alternatively, a universal processing system is provided in this embodiment of this application. For example, the universal processing system is usually referred to as a chip. The universal processing system includes one or more microprocessors that provide a processor function, and an external memory that provides at least a part of a storage medium. All these components are connected to other supporting circuits by using an external bus architecture. When the instruction stored in the memory is executed by the processor, the processor is enabled to perform some or all steps that are performed by the wireless access point or the control management device and that are in the methods for automatically accessing a WLAN by an IoT device in the embodiments in FIG. 7 to FIG. 12, and/or is configured for another process of the technology described in this application.

The method or algorithm steps described with reference to the content disclosed in this application may be implemented by hardware, or may be implemented by a processor by executing a software instruction. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in the network device. Certainly, the processor and the storage medium may exist in the network device as discrete components.

Specifically, referring to FIG. 17, an embodiment of a communications system 1700 according to an embodiment of this application includes an IoT device 1701 and a network device 1702.

The IoT device 1701 implements data transmission with the network device 1702 through a network system.

The IoT device 1701 has all functions of the IoT device in FIG. 7 to FIG. 12, and the network device 1702 has all functions of the network device in FIG. 7 to FIG. 12.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that, the disclosed system, apparatus, and method may be implemented in other manners. For example, the described apparatus embodiments are merely examples. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions in the embodiments.

In addition, the function units in the embodiments of this application may be integrated into one processing unit, or each of the units may exist alone physically, or two or more units may be integrated into one unit. The integrated unit may be implemented in a form of hardware, or may be implemented in a form of a software function unit. When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

In conclusion, the foregoing embodiments are merely intended to describe the technical solutions of this application, but not to limit this application. Although this application is described in detail with reference to the foregoing embodiments, a person of ordinary skill in the art should understand that the technical solutions described in the foregoing embodiments may still be modified, or some technical features in the technical solutions may be equivalently replaced. These modifications or replacements do not make the essence of the corresponding technical solutions fall outside the scope of the technical solutions of the embodiments of this application.

## Claims

1. A method for automatically accessing a wireless local area network (WLAN) by an Internet of Things (IOT) device, comprising:
obtaining, by the IoT device, a first packet sent by a first network device, wherein the first packet carries at least one first service set identifier (SSID) and first indication information, and the first indication information is used to indicate the IoT device to access a first WLAN identified by the first SSID; and
sending, by the IoT device, a first access request based on the first indication information, to request to access the first WLAN.

2. The method according to claim 1, wherein the first packet comprises an extended field, and the extended field is used to carry the first indication information.

3. The method according to claim 2, wherein
the extended field is an extended element field; or
the extended field is an extended feature field.

4. The method according to claim 1, wherein the first indication information is carried by extending a reserved field of the first packet; or
the first indication information is carried by extending an extension field that is of the first packet and that carries an element field of the first SSID.

5. The method according to any one of claims 1 to 4, wherein the first indication information comprises a first network descriptor (ND).

6. The method according to claim 5, wherein the first ND is used to indicate that the first SSID is an IoT SSID.

7. The method according to any one of claims 1 to 6, wherein the first access request is an initial access request that the IoT device requests to access the first WLAN.

8. The method according to any one of claims 1 to 3, wherein the first indication information is further used to indicate an access parameter required by the IoT device to access the first WLAN.

9. The method according to claim 8, wherein the required access parameter comprises at least one of the following:
authentication information, and
encryption information.

10. The method according to claim 8 or 9, wherein the first indication information is an access information descriptor (SAD).

11. The method according to claim 10, wherein the access information descriptor SAD is used to indicate that the first SSID is an SSID for secondary access.

12. The method according to any one of claims 8 to 11, wherein before the receiving, by the IoT device, a first packet, the method further comprises:
receiving, by the IoT device, a second packet, wherein the second packet carries a second SSID and second indication information, and the second indication information is used to indicate the IoT device to access a second WLAN identified by the second SSID; and
sending, by the IoT device, a second access request based on the second indication information, to request to access the second WLAN.

13. The method according to claim 12, wherein the second packet is a beacon frame or a probe response frame.

14. The method according to any one of claims 1 to 13, wherein the first network device is a first wireless access point (AP) or a control management device.

15. The method according to any one of claims 1 to 7, wherein the first packet is a beacon frame or a probe response frame.

16. The method according to any one of claims 1 to 14, wherein the first packet is a wireless network disassociation frame or an http restful interface packet.

17. The method according to any one of claims 1 to 15, wherein the first packet further carries third indication information, and the third indication information is used to indicate an access procedure in which the IoT device accesses a WLAN.

18. The method according to any one of claims 12 to 17, wherein the second packet further carries fourth indication information, and the fourth indication information is used to indicate an access procedure in which the IoT device accesses a WLAN.

19. A method for automatically accessing a wireless local area network (WLAN) by an Internet of Things (IOT) device, comprising:
sending, by a first network device, a first packet to the IoT device, wherein the first packet carries at least one first service set identifier (SSID) and first indication information, and the first indication information is used to indicate the IoT device to access a first WLAN identified by the first SSID; and
receiving, by the first network device, a first access request that is sent by the IoT device for requesting to access the first WLAN.

20. The method according to claim 19, wherein the first packet comprises an extended field, and the extended field is used to carry the first indication information.

21. The method according to claim 20, wherein
the extended field is an extended element field; or
the extended field is an extended feature field.

22. The method according to claim 19, wherein the first indication information is carried by extending a reserved field of the first packet; or
the first indication information is carried by extending an extension field that is of the first packet and that carries an element field of the first SSID.

23. The method according to any one of claims 19 to 22, wherein the first indication information comprises a first network descriptor (ND).

24. The method according to claim 23, wherein the first ND is used to indicate that the first SSID is an IoT SSID.

25. The method according to any one of claims 19 to 24, wherein the first access request is an initial access request that the IoT device requests to access the first WLAN.

26. The method according to any one of claims 19 to 21, wherein the first indication information is further used to indicate an access parameter required by the IoT device to access the first WLAN.

27. The method according to claim 26, wherein the access parameter comprises at least one of the following:
authentication information, and
encryption information.

28. The method according to claim 26 or 27, wherein the first indication information is an access information descriptor SAD.

29. The method according to claim 28, wherein the access information descriptor (SAD) is used to indicate that the first SSID is an SSID for secondary access.

30. The method according to any one of claims 26 to 29, wherein before the sending, by a first network device, a first packet to the IoT device, the method further comprises:
sending, by the first network device, a second packet to the IoT device, wherein the second packet carries a second SSID and second indication information, and the second indication information is used to indicate the IoT device to access a second WLAN identified by the second SSID; and
receiving, by the first network device, a second access request that is sent by the IoT device for requesting to access the second WLAN.

31. The method according to claim 30, wherein the second packet is a beacon frame or a wireless network probe response frame.

32. The method according to any one of claims 19 to 31, wherein the first network device is a first wireless access point (AP) or a control management device.

33. The method according to any one of claims 19 to 25, wherein the first packet is a beacon frame or a wireless network probe response frame.

34. The method according to any one of claims 19 to 32, wherein the first packet is a wireless network disassociation frame or an http restful interface packet.

35. The method according to any one of claims 19 to 33, wherein the first packet further carries third indication information, and the third indication information is used to indicate an access procedure in which the IoT device accesses a WLAN.

36. The method according to any one of claims 30 to 35, wherein the second packet further carries fourth indication information, and the fourth indication information is used to indicate an access procedure in which the IoT device accesses a WLAN.

37. An Internet of Things (IOT) device, comprising a processor and a memory, wherein
the memory stores computer instructions; and
the processor invokes the computer instructions, to enable the IoT device to perform the method according to any one of claims 1 to 18.

38. A network device, comprising a processor and a memory, wherein
the memory stores computer instructions; and
the processor invokes the computer instructions, to enable the network device to perform the method according to any one of claims 19 to 36.

39. A computer-readable storage medium, comprising computer instructions, wherein when the computer instructions are run on a computer, the computer is enabled to perform the method according to any one of claims 1 to 18 or the method according to any one of claims 19 to 36.

40. A computer program product, comprising a program, wherein when the program is run on a computer, the computer is enabled to perform the method according to any one of claims 1 to 18 or the method according to any one of claims 19 to 36.

41. A communications system, comprising the IoT device according to claim 37 and the network device according to claim 38.
